# EUROPEAN PATENT APPLICATION

(11) **EP 0 580 114 A2**
(43) Date of publication of application: **26.01.1994**
(21) Application number: 93111577.8
(22) Date of filing: 20.07.1993
(51) Int. Cl.: C08G 63/52, C08G 63/00, C08L 67/06

(54) **Unsaturated polyester resins modified with liquid rubber-epoxy adducts**

(30) Priority: 22.07.1992 US 918296
(71) Applicant: THE B.F. GOODRICH COMPANY, Akron Ohio 44313-1799 (US)
(72) Inventor: Bertsch, Robert Joseph, Brecksville, Ohio 44141 (US)
(74) Representative: von Kreisler, Alek, Dipl.-Chem.

(57) **Abstract**

An unsaturated polyester resin is toughened by reacting into its backbone an epoxy-terminated reactive liquid polymer (epoxy-RLP). The epoxy-RLP can be a difunctional epoxy-RLP or a reaction product statistical monofunctional epoxy-RLP or a blended product statistical monofunctional epoxy-RLP. The reactive liquid polymer has a carbon-carbon backbone typically containing polymerized units of at least one vinylidene monomer having at least one terminal CH₂=C〈 group, preferably a copolymer backbone of 1,3-butadiene/acrylonitrile. The modified unsaturated polyester is prepared by co-reacting the epoxy-RLP with the reactants of the unsaturated polyester resin by conventional means. The inventive resins have improved fracture energy toughness over unmodified unsaturated polyester resins.

## Description

### BACKGROUND OF THE INVENTION

### Field of the Invention

The present invention generally relates to the modification of unsaturated polyester resins with reactive liquid polymers (RLPs). More particularly, the invention relates to the modification of unsaturated polyester resins by reacting into the backbone of the polyester, a liquid elastomer or rubber polymer having terminal reactive epoxy functionality.

### Background Information

Co-reacting a toughening agent with the components of an unsaturated polyester resin in order to introduce the toughening agent into the backbone of the unsaturated polyester resin and produce a toughened resin is known. U.S. Patent No. 4,290,939 to Bertsch et al. relates to such a toughened unsaturated polyester resin having hydroxyl-terminated (HT) and carboxyl-terminated (CT) reactive liquid polymer tougheners reacted into the polyester backbone. Generally the process for making such modified unsaturated polyester resins involves reacting the hydroxyl- and carboxyl-terminated liquid elastomers with the reactants of the unsaturated polyester resins. The present inventors have found that using carboxyl-terminated RLPs is disadvantageous in that it is very time consuming chemistry. The CT-RLP cannot simply be added at the same time with all the other polyester ingredients because the "polyester" diacids react faster than the diacids of the CT-RLP with the polyol, thus the CT-RLP would never get reacted into the backbone of the polyester. Therefore, the carboxyl-terminated RLP must first be cooked with the polyol component typically for a period of about 8 to 10 hours. Then the resin synthesis can continue. Although unsaturated polyester resins made from hydroxyl-terminated RLPs do not have this problem, the inventors have found that upon storage of a styrene solution these HT-RLP modified unsaturated polyester resins, there occurs a separation of a rubber layer from the main portion of the resin. Additionally, when utilizing either of the carboxyl-terminated RLP or the hydroxyl-terminated RLP for adduction into the unsaturated polyester backbone, the condensation reaction to form the modified unsaturated polyester must be continued until an acid number well in excess of 50 is reached. An acid number lower than 50 produces an unworkable gelled system. This relatively higher acid number in the end polymer is undesirable because too much acid interferes with the proper rate of chemical thickening to provide for optimum molding conditions.

These problems have been overcome by the present invention which is an unsaturated polyester resin having an epoxy-terminated (ET) reactive liquid polymer reacted into the backbone of the unsaturated polyester resin.

When using an epoxy-terminated RLP in the condensation reaction forming the modified unsaturated polyester resin, it is possible to stop the reaction at a significantly lower acid number, 35, without the system gelling. Thus, eliminated is the unwanted relatively higher acid content heretofore known with carboxyl-terminated and hydroxyl-terminated RLP modified unsaturated polyester resins. Unsaturated polyester resins synthesized using ET-RLPs do not require a long pre-reaction and they do not separate upon storage. Additionally the inventive modified unsaturated polyester resins have improved fracture energy toughness over unmodified unsaturated polyester resins while retaining other properties, including thermomechanical properties, and in some instances comparable fracture energy toughness as compared to HT-RLP and CT-RLP modified unsaturated polyester resins.

### SUMMARY OF THE INVENTION

The present invention relates to an unsaturated polyester resin which has been toughened by reacting an epoxy-terminated reactive liquid polymer (epoxy-RLP) into the backbone of the unsaturated polyester resin. The unsaturated polyester resin so modified has improved fracture energy toughness as compared to unmodified unsaturated polyester resins, while retaining its thermomechanical properties. In some instances the epoxy-RLP modified polyester resins have fracture energy toughness comparable to known hydroxyl-RLPs and carboxyl-RLP modified unsaturated polyester resins. Modifying the unsaturated polyester resin with epoxy-RLP eliminates the problems in the past associated with using carboxyl-RLP which requires a time consuming esterification reaction and hydroxyl-RLP which result in a modified resin whereby a rubber layer separates out. The inventive modified unsaturated polyester resins find use for admixture with selected RLPs which mixture is cured to provide a modified unsaturated polyester resin having significantly enhanced toughness as measured by fracture energy over unmodified counterparts or counterparts modified by known methods of adduction or admixing alone.

In another aspect, the invention is directed to a molding composition composed of the above-described unsaturated polyester resin modified with liquid rubber-epoxy adduct and conventional processing additives.

In still further aspects, the invention is directed to a shaped article made from the above-described compositions and a method for making the modified unsaturated polyester resins.

### DETAILED DESCRIPTION OF THE PREFERRED EMBODIMENT(S)

In accordance with the present invention, an epoxy-terminated reactive liquid polymer (RLP), also deemed an elastomer or rubber, is reacted into the backbone of an unsaturated polyester resin. Suitable epoxy-terminated RLPs are of two general types: diepoxy-terminated RLP (difunctional) and statistical monofunctional epoxy-terminated RLP. The statistical monofunctional RLP is further defined as comprising two different types, namely a reaction product statistical monofunctional epoxy-terminated RLP and a blended product statistical monofunctional epoxy-terminated RLP. The description of the unsaturated polyester resin will follow the discussion of the epoxy-terminated RLPs.

### Epoxy-Terminated Reactive Liquid Polymer - Difunctional Type

One suitable type of epoxy modified RLP is a diepoxy-terminated type polymer, and is described in U.S. Patent No. 4,530,962, hereby incorporated by reference, and which is made by reacting a carboxyl-terminated RLP with a diepoxide as follows hereinbelow.

The carboxyl-terminated liquid polymers suitably have Brookfield viscosities from about 500 cps to about 2,500,000 cps at 25°C, more preferably from about 5000 cps to about 1,200,000 cps, and have polymeric backbones comprising carbon-carbon linkages. The carboxyl-terminated liquid polymers typically have carboxyl equivalent weights (gram molecular weight per carboxyl group) from about 300 to about 5,000, more preferably from about 600 to about 3,000. The carboxyl functional groups are located at least at the ends of a polymer molecule, but there may also be additional group(s) located pendant to a polymer backbone. The average number of total carboxyl groups typically may be from about 0.5 to about 4 groups per molecule, more preferably from 0.5 to 2.5 groups per molecule.

The backbone carbon-carbon linkages of the carboxyl-terminated polymers typically contain polymerized units of at least one vinylidene monomer having at least one terminal CH₂ = C〈 group selected from (a) monoolefins containing 2 to 14 carbon atoms, more preferably 2 to 8 carbon atoms, such as ethylene, propylene, isobutylene, 1-butene, 1-pentene, 1-hexene, 1-dodecene, and the like; (b) dienes containing 4 to 10 carbon atoms, more preferably 4 to 8 carbon atoms, such as butadiene, isoprene, 2-isopropyl-1,3-butadiene, and the like; and (c) vinyl and allyl ethers of alkyl radicals containing 1 to 8 atoms such as vinyl methyl ether, allyl methyl ether, and the like; (d) vinyl and allyl esters of carboxylic acids containing 2 to 8 carbon atoms such as vinyl acetate, vinyl propionate, allyl acetate, and the like; and (e) acrylic acids and acrylates having the formula: 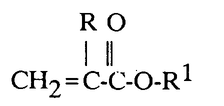
wherein R is hydrogen or an alkyl radical containing 1 to 3 carbon atoms and R¹ is hydrogen or an alkyl radical containing 1 to 18 carbon atoms, more preferably 1 to 8 carbon atoms, or an alkoxyalkyl, alkylthioalkyl, or cyanoalkyl radical containing 2 to 12 carbon atoms, more preferably 2 to 8 carbon atoms. Preferably R¹ is hydrogen or an alkyl radical containing 2 to 8 carbon atoms. Examples of suitable acrylates include ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, β-cyanoethyl acrylate, cyanooctyl acrylate, methyl methacrylate, ethyl methacrylate, octyl methacrylate, and the like. Often two or more types of these polymerized monomeric units are contained in the polymeric backbone.

The vinylidene monomers described above may be polymerized readily with from 0% up to about 50% by weight, more preferably from 0% up to about 35% by weight, of at least one comonomer selected from the group consisting of (f) vinyl aromatics having the formula 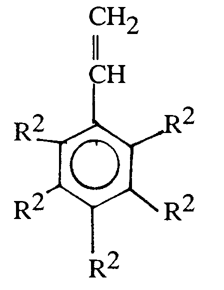
wherein R² is hydrogen, halogen or an alkyl radical containing from 1 to 4 carbon atoms such as styrene, α-methyl styrene, chlorostyrene, vinyl toluene, and the like; (g) vinyl nitriles having the formula 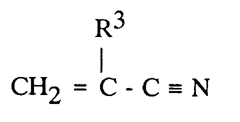
wherein R³ is hydrogen or an alkyl radical containing 1 to 3 carbon atoms, such as acrylonitrile, methacrylonitrile and the like; (h) divinyls and diacrylates such as divinyl benzene, divinyl ether, diethylene glycol diacrylate, and the like; (i) amides of α,β-olefinically unsaturated carboxylic acids containing 2 to 8 carbon atoms such as acrylamide and the like; and (j) allyl alcohol and the like. Liquid polymer compositions comprising polymerized units of a major amount of at least one vinylidene monomer listed in (a) to (e) with a minor amount of at least one comonomer listed in (f) to (j) are within the scope of this invention.

Examples of useful liquid polymeric backbones comprising carbon-carbon linkages include polyethylene, polyisobutylene, polyisoprene, polybutadiene, poly(vinyl ethyl ether), poly(ethylacrylate), as well as copolymers of butadiene and acrylonitrile; butadiene and styrene; butadiene and acrylates; vinyl ethyl ether and diallyl ether; vinyl ethyl ether and α-methyl styrene.

Liquid carboxyl-terminated polymers may be prepared by free-radical polymerization using carboxyl-containing initiators and/or modifiers as disclosed in U.S. Pat. No. 3,285,949 and German Pat. No. 1,150,205 and by solution polymerization using lithium metal or organometallic compounds and post-treating the polymers to form carboxyl groups as disclosed in U.S. Patents No. 3,135,716 and 3,431,235. The polymers can also be prepared by reacting liquid polymers having other than terminal carboxyl groups with compounds so as to yield carboxyl groups. For example, liquid carboxyl-terminated polymers can be prepared from liquid hydroxyl-terminated polymers by reaction with dicarboxylic acids or their anhydrides. Liquid halogen-terminated polymers can be reacted with unsaturated anhydrides in the presence of Lewis acids to yield carboxyl groups. Thus, it is seen that the method of preparing the liquid carboxyl-terminated polymer is not critical to the invention. The essential features of the polymer are that it have at least terminal carboxyl groups and a polymeric backbone of carbon-carbon linkages.

Examples of preferred liquid carboxyl-terminated polymers include carboxyl-terminated polyethylene, carboxyl-terminated polyisobutylene, carboxyl-terminated polybutadiene, carboxyl-terminated polyisoprene, carboxyl-terminated poly(ethylacrylate), as well as carboxyl-terminated copolymers of butadiene and acrylonitrile and butadiene and styrene. Carboxyl-terminated copolymers of butadiene with acrylonitrile or styrene were found to be especially useful. These polymers may contain from about 50% to about 99% by weight of butadiene, from about 0% to about 40% by weight of acrylonitrile or styrene and from about 1% to about 15% by weight of carboxyl, based upon the total weight of polymer. They are commercially available as Hycar™ reactive liquid polymers from The BFGoodrich Company, Akron, Ohio, U.S.A.

The preferred polymers are those known as "HYCAR" polymers CTB, CTBN and CTBNX, commercially available from The BFGoodrich Company, U.S.A.

The CTB polymer is a carboxyl-terminated butadiene type polymer and may be generally represented by the formula:

HOOC [CH₂-CH=CH-CH₂]ₓ COOH

wherein x represents the number of butadiene units per molecule, with x desirably being from about 40 to about 300, and preferably from about 75 to about 85. HYCAR CTB has a functionality of about 2.

The CTBN polymer is a carboxyl-terminated butadiene-acrylonitrile type random copolymer which may be generally represented by the formula: 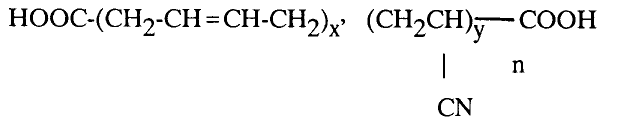
wherein x' represents the number of butadiene units per molecule and y represents the number of acrylonitrile units per molecule, when the random copolymer contains 10 percent acrylonitrile x' is about 0.9 and y is about 0.1, when the random copolymer contains 17 percent acrylonitrile x' is about 0.8 and y is about 0.2, and when the random copolymer contains 26 percent acrylonitrile x' is about 0.7 and y is about 0.3, and with n desirably being from about 40 to about 300, and preferably from about 75 to about 85. The copolymer has a functionality of from about 1.8 to about 1.85

The CTBNX polymer is a carboxyl-terminated butadiene-acrylonitrile-acrylic acid terpolymer which may be approximately represented by the formula: 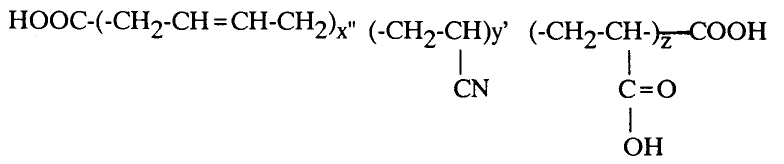
wherein x'' represents the number of butadiene units per molecule, y' represents the number of acrylonitrile units per molecule, and z represents the number of acrylic acid units per molecule, and further wherein the terpolymer contains from about 17.5 percent ± 2.0 percent bound acrylonitrile and preferably has a molecular weight of from about 2,000 to about 15,000. The terpolymer has a functionality of about 2.3.

The most preferred carboxyl-terminated polymers are copolymers of 1,3-butadiene and 17.5 percent ± 2.0 bound acrylonitrile with α,ω-(4-cyano-4-methyl butyric acid), which is commercially available as HYCAR™ 1300X8 reactive liquid polymer from The BFGoodrich Company, Akron, Ohio, U.S.A.; and polybutadiene homopolymer α,ω-(4-cyano-4-methyl butyric acid), which is commercially available as HYCAR® 2000X162 reactive liquid polymer from the same company. The best results were obtained using a copolymer of butadiene containing 25.5 percent ± 2.0 bound acrylonitrile, commercially available as HYCAR 1300X13 reactive liquid polymer from The B.F.Goodrich Company, U.S.A.

In general, suitable epoxy resin is a compound containing more than one α or 1,2-epoxy group which is designated by the structural formula: 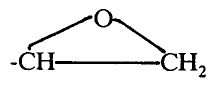
many of which are commercially available and well-known to the art and to the literature. Desirable epoxy resins include polyhydric phenol polyether alcohols; glycidyl ethers of novolac resins such as epoxylated phenolformaldehyde novolac resin; glycidyl ethers of mononuclear di- and trihydric phenols; glycidyl ethers of bisphenols such as diglycidyl ether of tetrabromobisphenol A; glycidyl ethers of polynuclear phenols; epoxy resin from diphenolic acid; glycidyl ethers of aliphatic polyols such as chlorine-containing aliphatic diepoxy and polyepichlorohydrin; glycidyl esters such as aliphatic diacid glycidyl esters and epoxidized phenolphthalein; glycidyl epoxides containing nitrogen such as glycidyl amides and amide-containing epoxies; glycidyl derivatives of cyanuric acid; glycidyl resins from melamines; glycidyl amines such as triglycidyl ether amine of p-aminophenol and bis(2,3-epoxy-propyl)methylpropylammonium, p-toluenesulfonate; and glycidyl triazines; thioglycidyl resins such as epoxidized bisulfide; silicon-glycidyl resins such as 1,4-bis[(2,3-epoxypropoxy)dimethylsilyl]; fluorine glycidyl resins; epoxy resins which are synthesized from monoepoxies other than epihalohydrins including epoxy resins from unsaturated monoepoxies such as polyallyl glycidyl ether and glycidyl sorbate dimer; epoxy resins from monoepoxy alcohols; epoxy resins from monoepoxies by ester interchange; epoxy resins from glycidaldehyde; polyglycidyl compounds containing unsaturation such as allyl-substituted diglycidyl ether of bisphenol A; epoxy resins which are synthesized from olefins and chloroacetyls such as butadiene dioxide, vinylcyclohexene dioxide, epoxidized polybutadiene, and bis(2,3-epoxycyclopentyl)ether; and epoxy-resin adducts of the above. A more comprehensive list of epoxy resins can be found in Handbook of Epoxy Resins, by Henry Lee and Kris Neville, McGraw-Hill, Inc., 1967, which is hereby incorporated by reference. A highly preferred epoxy resin polymer for use in the present invention is diglycidyl ether of bisphenol A (DGEBA) which has the following structural formula: 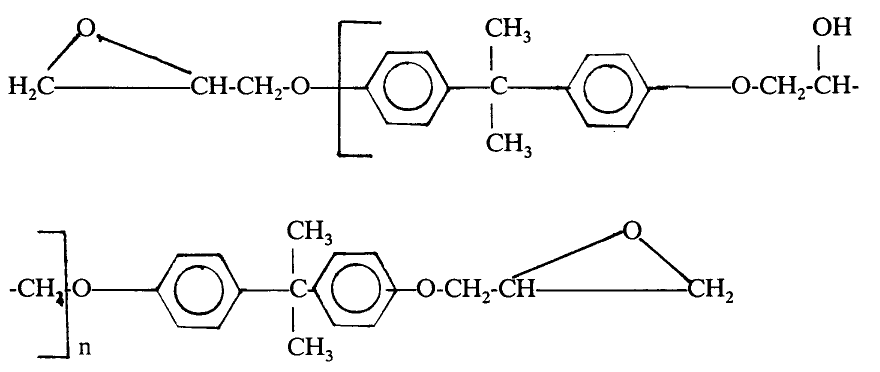
wherein n is an integer from 0 to 18, desirably from 0 to 14.3, and preferably from 0 to 5.5. The average molecular weight of DGEBA is from about 340 to about 4000, and preferably from about 340 to 2600.

The reaction of the carboxyl terminated-RLP with the epoxy resin can be carried out by conventional methods, e.g., by direct reaction at temperatures of 110°C to 150°C in an inert atmosphere or by heating in a solvent followed by distillation to remove the solvent. Conventional catalysts can be used if desired. On a mole basis, a 2:1 ratio of diepoxide to RLP is typically used in the reaction. Suitable diepoxy-terminated reactive liquid polymer is commercially available as HYCAR™ polymer ETBN 1300X44, which has a butadiene/acrylonitrile backbone derived from a CTBN polymer having a bound acrylonitrile content of about 17%. However, it has been found that the acrylonitrile content of the ETBN will be somewhat less relative to the CTBN reactant from which the ETBN is made.

### Epoxy-Terminated Reactive Liquid Polymer - Statistical Monofunctional Type

Another suitable epoxy modified RLP for reacting into the backbone of the unsaturated polyester resin is a low viscosity statistical monofunctional reactive liquid polymer, consisting of two different types made by two distinct processes. More particularly, the first type is a reaction product statistical monofunctional polymer composition, and the second type is a blended product statistical monofunctional polymer composition, however both are generally liquids. It is to be understood that the term "statistical monofunctional" used for describing the reactive liquid polymers useful in the present invention, means that the rubber or elastomer composition is regarded, statistically, as having 100 percent monofunctional end groups. However, the statistical monofunctional rubber composition may include difunctional, nonfunctional, and monofunctional species, or alternatively only difunctional and non-functional species, as will be described in greater detail below.

The greatest advantage provided by these statistical monofunctional polymers is that their viscosity is approximately one-half (1/2) the value of equivalent commercially known difunctional polymers. This is demonstrated by the measured viscosities summarized in Tables I and IA below. Table I compares the viscosity of the precursor statistical monofunctional carboxyl-terminated polymers versus difunctional carboxyl-terminated polymers having the same compositions of butadiene homopolymers or butadiene-acrylonitrile copolymers. Also compared in Table I is the viscosity of epoxy-terminated reaction product statistical monofunctional polymers versus difunctional epoxy-terminated polymers having the same compositions of butadiene-acrylonitrile copolymeric backbones. Table IA compares the viscosity of the blended product statistical monofunctional carboxyl-terminated polymers of the present invention versus difunctional carboxyl-terminated polymers having the same compositions of butadiene homopolymers or butadiene/acrylonitrile copolymers.

Regarding Table I, polymers "A" and "a" are homopolymers of butadiene while polymers B/b, C/c, D/d, E/e, and F/f are butadiene/acrylonitrile copolymers. The polymer designations in upper case letters represent reaction product statistical monofunctional polymers, while the lower case letters represent structurally equivalent difunctional polymers. Polymers B/b, C/c and D/d have terminal carboxyl functionality while polymers E/e and F/f have terminal epoxy functionality. The designation "EPHR" stands for Equivalents of Carboxyl Per Hundred Parts of Rubber.

**TABLE I**

| Comparative Viscosity of Reaction Product Statistical Monofunctional vs. Difunctional Carboxyl Terminated Polymers | | | |
|---|---|---|---|
| Polymer | Acrylonitrile Content (% by weight) | Viscosity (mPa·s # 27°C) | Carboxyl EPHR |
| A | ----- | 22,600 | 0.022 |
| a | ----- | 60,000 | 0.045 |
| B | 10.2 | 30,600 | 0.025 |
| b | 10.2 | 60,000 | 0.050 |
| C | 16.8 | 65,000 | 0.022 |
| c | 16.8 | 135,000 | 0.052 |
| D | 25.9 | 202,000 | 0.024 |
| d | 25.9 | 500,000 | 0.057 |
| E | 16 | 200-300,000 | N/A |
| e | 16 | 2,000,000 | |
| F | 26 | 750-850,000 | N/A |
| f | 26 | * | |
| * too viscous to obtain data | | | |

Regarding Table IA, polymers A' and a are homopolymers of butadiene while polymers C'/c and D'/d are butadiene/acrylonitrile copolymers. The polymer designations in primed upper case letters represent the blended product statistical monofunctional carboxyl-terminated polymers of the present, while the lower case letters represent structurally equivalent difunctional carboxyl-terminated polymers. The designation "EPHR" stands for Equivalents of Carboxyl Per Hundred Parts of Rubber.

**TABLE IA**

| Comparative Viscosity of Blended Product Statistical Monofunctional vs. Difunctional Carboxyl Terminated Polymers | | | |
|---|---|---|---|
| Polymer | Acrylonitrile Content (% by weight) | Viscosity (mPa·s @ 27°C) | Carboxyl EPHR |
| A' | ----- | 20,450 | 0.020 |
| a | ----- | 60,000 | 0.045 |
| C' | 16.8 | 67,400 | 0.025 |
| c | 16.8 | 135,000 | 0.052 |
| D' | 25.9 | 218,000 | 0.028 |
| d | 25.9 | 500,000 | 0.057 |

It will be appreciated by one skilled in the art that the viscosity of individual polymers will vary depending upon the monomeric composition of the polymeric backbone. However, generally the viscosity ranges from about 10,000 mPa·s to about 1.5 million mPa·s. For polymers of polybutadiene or polybutadiene and acrylonitrile wherein the acrylonitrile content ranges from 0 percent to about 50 percent by weight of the polymer, the viscosity ranges from about 12,000 mPa·s to about 1.5 million mPa·s, and preferably 15,000 mPa·s to about 1 million mPa·s.

### Reaction Product Statistical Monofunctional RLP

The reaction product statistical monofunctional RLP composition is the reaction product of backbone-forming monomers and a mixture of difunctional and non-functional initiators which composition is a blend or a mixture of difunctional polymers, monofunctional polymers, and non-functional polymers, generally containing an average functionality per polymer of from about 0.2 to about 1.8, desirably from about 0.6 to about 1.5, and preferably 0.8 to about 1.2 and most preferably approximately one, and hence is referred to as a statistical monofunctional polymer. The reaction product statistical monofunctional RLP is a "statistical stew" of difunctional, monofunctional and non-functional polymers. On average, or statistically, the monofunctional epoxy terminated reactive liquid rubber polymer will have a terminal epoxy group at one end of the polymer chain (derived originally from a carboxyl terminus), and a non-reactive or non-functional group at the other end of the polymer chain. Each terminus is derived from a fragment of the initiators used in the synthesis employed to make the polymers. When the particular polymer is a difunctional terminated polymer, it will contain a terminal epoxy group at both ends of the polymer chain (each derived originally from a carboxyl terminus). When the polymer is a non-functional polymer, it will contain non-functional groups on each end of the polymer chain.

The reaction product statistical monofunctional epoxy-terminated reactive polymer useful in the present invention for adduction into the backbone of the unsaturated polyester resin is generally produced by reacting epoxide, in a conventional manner, with carboxyl-terminated statistical monofunctional polymer, which is made in the following manner.

The mixture comprising the statistical monofunctional carboxyl-terminated polymer comprises monofunctional, difunctional and non-functional polymer. The monofunctional polymer can be generally indicated by the structural formula: 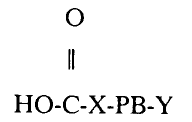
wherein 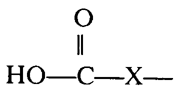
is derived from the difunctional initiator, ―Y is derived from the non-functional initiator and ―PB― represents the carbon-carbon backbone of the polymer. Generally, the difunctional carboxyl-terminated polymer is represented by the structural formula 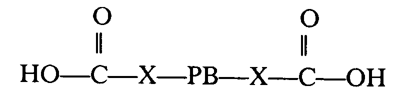
The statistical monofunctional carboxyl-terminated polymers will contain generally a small or minor amount of such difunctional polymers, as well as non-functional polymers generally represented by the structural formula

Y―PB―Y

wherein Y is derived from a non-functional initiator. Regardless of the amounts of the various difunctional, or monofunctional carboxyl-terminated polymers, as well as the non-functional terminated polymers, the overall reaction product statistical monofunctional carboxyl-terminated polymeric compositions generally contain from about 0.25 to about 4.5 percent by weight of carboxyl groups based upon the total weight of the statistical polymeric composition and have an acid number of from about 3.0 to about 52.

The non-reactive terminus -Y of the molecule is referred to as such because it will not undergo condensation or addition reactions, as compared to the carboxyl terminus which will undergo that type of reaction. The composition of the terminus will vary depending upon the polymerization initiators used, however suitable groups include an alkyl or a nitrile.

The backbone -PB- of the reaction product statistical monofunctional carboxyl-terminated polymer comprises repeating units made from any monomer which is polymerizable by any free radical reaction mechanism. These monomers are referred to herein as backbone-forming monomers. The repeating unit composition of the polymer backbone may be made from a single monomer (homopolymer) or two or more monomers (copolymer). Preferably, the polymeric backbones are derived from at least one vinyl monomer having at least one terminal vinyl (CH₂=) group and up to 18 carbon atoms. Examples of suitable vinyl monomers include olefins having from 2 to 10 carbon atoms such as ethylene, isobutylene, dienes containing 4 to 10 carbon atoms, and preferably 4 to 8 carbon atoms, such as butadiene, isoprene (2-methyl-1,3-butadiene), 2-isopropyl-1,3-butadiene and chloroprene (2-chloro-1,3-butadiene); vinyl and allyl esters of carboxylic acids containing 2 to 8 carbon atoms such as vinyl acetate, vinyl propionate and allyl acetate; vinyl and allyl ethers of alkyl radicals containing 1 to 8 carbon atoms such as vinyl methyl ether and allyl methyl ether; and acrylates having the formula 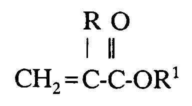
wherein R is hydrogen or an alkyl radical containing 1 to 3 carbon atoms, such as methyl, ethyl, propyl, and isopropyl; R¹ is an alkyl radical containing 1 to 18 carbon atoms, and preferably 1 to 8 carbon atoms, or an alkoxyalkyl, alkylthioalkyl, or cyanoalkyl radical containing 2 to 12 carbon atoms, and preferably 2 to 8 carbon atoms. Preferably, R¹ is an alkyl radical containing 1 to 8 carbon atoms. Suitable acrylates include ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, α-cyanoethyl acrylate, cyanooctyl acrylate, methyl methacrylate, ethyl methacrylate, octyl methacrylate, and the like. The polymeric backbone may comprise homopolymers of the above vinyl monomers or copolymers of two or more of the monomers.

The vinyl monomers described above may also be polymerized readily with up to about 50 percent by weight, but preferably up to about 35 percent by weight, of at least one comonomer such as a vinyl aromatic having the formula 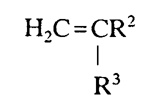
wherein R² is hydrogen or methyl and R³ is an aromatic moiety having from 6 to 15 carbon atoms resulting in compounds such as styrene, α-methyl styrene, chlorostyrene, and vinyl toluene; a vinyl nitrile having the formula 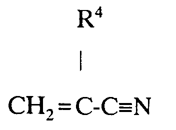
wherein R⁴ is hydrogen or methyl, resulting in compounds such as acrylonitrile and methacrylonitrile, respectively; vinyl acids having from 3 to 12 carbon atoms such as acrylic acid, methacrylic acid, and itaconic acid; an amide of olefinically unsaturated carboxylic acids containing 2 to 8 carbon atoms such as acrylamide and methacrylamide; or an allyl alcohol having from 3 to 10 carbon atoms.

Examples of suitable polymeric backbones include homopolymers of polyisoprene, polybutadiene, poly(vinylethylether), poly(ethylacrylate) and poly(butylacrylate); copolymers of butadiene and acrylonitrile, butadiene and styrene, vinyl acetate and isoprene, vinyl acetate and chloroprene, methyl acrylate and butadiene, methyl acrylate and ethyl acrylate, methyl acrylate and butyl acrylate, methyl acrylate and 2-ethylhexyl acrylate, ethyl acrylate and ethylene, ethyl acrylate and isobutylene, ethyl acrylate and isoprene, ethyl acrylate and butadiene, ethyl acrylate and vinyl acetate, ethyl acrylate and styrene, ethyl acrylate and chlorostyrene, ethyl acrylate and n-butyl acrylate, ethyl acrylate and 2-ethylhexyl acrylate; ethyl acrylate and acrylic acid; ethyl acrylate and acrylamide; butyl acrylate and styrene; butyl acrylate and acrylonitrile; butyl acrylate and vinyl chloride; terpolymers of butadiene, acrylonitrile, and acrylic acid; ethyl acrylate, styrene and butadiene; and ethyl acrylate, n-butyl acrylate and 2-ethylhexyl acrylate.

One group of preferred reaction product low viscosity statistical monofunctional carboxyl-terminated reactive liquid polymers have polymeric backbones comprising from about 50 percent to 100 percent by weight of a diene monomer, such as isoprene or butadiene, and up to about 50 percent by weight of a vinyl nitrile comonomer, such as acrylonitrile, or a vinyl aromatic such as styrene. The acrylonitrile content preferably is from about 10 percent to about 35 percent, desirably is from about 16 percent to about 26 percent, and most preferably about 26 percent. Such polymers have a carboxyl content of from about 0.4 percent to about 10 percent by weight, preferably 0.4 percent to about 2.5 percent by weight, based upon the total weight of the polymer. These polymers have a number average molecular weight of from about 1000 to about 12,000.

Preferred polymers are these commercially available from The BFGoodrich Company known as "HYCAR" polymers CTB, CTBN, and CTBNX.

The CTB polymer is a carboxyl-terminated butadiene type polymer and may be generally represented by the formula:

HOOC [CH₂-CH=CH-CH₂]ₓ COOH

wherein x represents the number of butadiene units per molecule, with x desirably being from about 40 to about 300, and preferably from about 75 to about 85. Hycar CTB has a functionality of about 2.

The CTBN polymer is a carboxyl-terminated butadiene-acrylonitrile type random copolymer which may be generally represented by the formula: 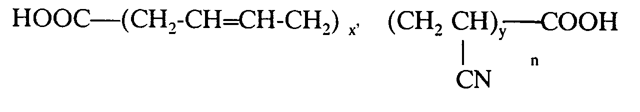
wherein x' represents the number of butadiene units per molecule and y represents the number of acrylonitrile units per molecule, when the random copolymer contains 10 percent acrylonitrile x' is about 0.9 and y is about 0.1, when the random copolymer contains 17 percent acrylonitrile x' is about 0.8 and y is about 0.2, and when the random copolymer contains 26 percent acrylonitrile x' is about 0.7 and y is about 0.3, and with n desirably being from about 40 to about 300, and preferably from about 75 to about 85. The copolymer has a functionality of from about 1.8 to about 1.85.

The CTBNX polymer is a carboxyl-terminated butadiene-acrylonitrile-acrylic acid terpolymer which may be approximately represented by the formula: 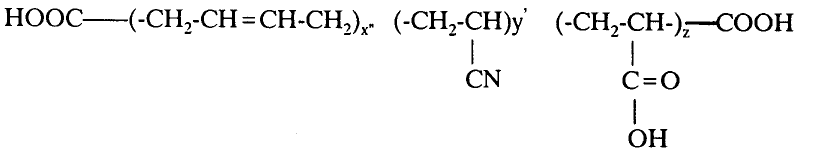
wherein x'' represents the number of butadiene units per molecule, y' represents the number of acrylonitrile units per molecule, and z represents the number of acrylic acid units per molecule, and further wherein the terpolymer contains from about 17 percent to about 20 percent acrylonitrile and preferably has a molecular weight of from about 2,000 to about 15,000. The terpolymer has a functionality of about 2.3.

More specifically, the reaction product statistical monofunctional carboxyl-terminated polymer can be made by any conventional addition polymerization technique employing a free radical mechanism. Generally, the reaction is conducted by mixing one or more backbone-forming monomers with a mixture of a difunctional and nonfunctional initiator, and a solvent, then heating. The monomers can be one or more of the polymerizable monomers described hereinabove.

The initiator is a mixture or blend of two different initiators, namely, a difunctional initiator and a non-functional initiator capable of initiating a free radical polymerization.

Considering the difunctional initiator, any difunctional initiator can be used. However, one skilled in the art will appreciate that when a difunctional initiator other than an organic acid is used, conversion of the terminal groups to acid groups will be required. For example, the hydroxyl groups on hydrogen peroxide or hydroxy ethyl disulfide require conversion to acid groups. Conventional methods may be used to accomplish the conversion such as by reaction with a cyclic acid anhydride, for example succinic anhydride. Preferably the difunctional initiator is an organic azo compound or a peroxide. The organic azo initiator preferably is a bis-azocyano acid having the formula 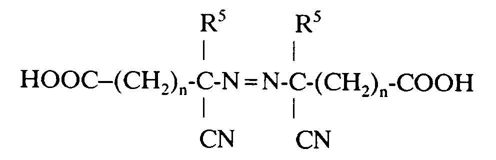
wherein R⁵ is an alkyl group of 1-3 carbon atoms, and n is an integer from 1 to 6. The preferred acids include azodicyanobutyric acid and azodicyanovaleric acid (ADVA), with ADVA being highly preferred. The preparation of these materials is known and disclosed in U.S. Patent Nos. 3,285,949 and 2,520,338, which are incorporated herein by reference. The organic azo initiator decomposes to form N₂ gas and free radicals having the formula 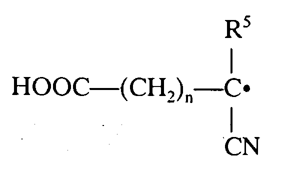
with the portion thereof having the structural formula 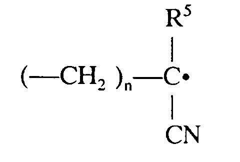
being represented by ―X― in the structural formula shown above for the monofunctional carboxyl-terminated polymer. The action of this type of initiator is due to the fact that the azo carbon-nitrogen bond is readily dissociated, as by thermal means.

The preferred difunctional peroxide initiator has the formula 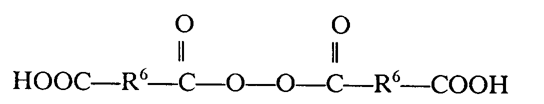
wherein R⁶ is an alkyl group having from about 2 to about 6 carbon atoms, and preferably 3 carbon atoms. A desirable peroxide is succinic acid peroxide and a preferred peroxide is glutaric acid peroxide. The difunctional peroxide initiator decomposes to form CO₂ gas and free radicals having the formula

HOOC―R⁶·

wherein R⁶ is represented by X in the structural formula shown above for the reaction product monofunctional carboxyl-terminated polymer useful in the present invention. The action of this type of initiator is due to the fact that the peroxide oxygen-oxygen bond is readily dissociated, as by thermal means.

Considering the non-functional initiator, any non-functional azo or peroxide initiator can be used. Preferably, the azo initiator is a bis-azocyano having the formula 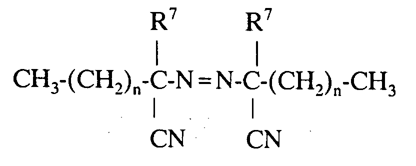
wherein R⁷ is an alkyl group of 1-3 carbon atoms and n is an integer from 0 to 6. Such compounds are known and disclosed in U.S. Patent No. 2,556,876. The preferred compound is 2,2'-azobis(2-methylpropionitrile) also known as AIBN. The azo initiator decomposes to form N₂ gas and free radicals having the formula 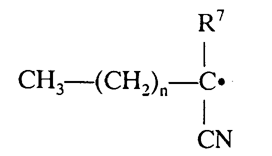
which is represented by ―Y as the non-reactive terminus of the reaction product statistical monofunctional carboxyl-terminated polymer described above. The action of this type of initiator also is due to the fact that the azo carbon-nitrogen bond is readily dissociated, as by thermal means.

The non-functional peroxide initiator preferably is an acyl peroxide having the formula 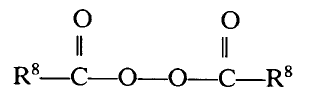
wherein R⁸ is an aromatic, or an unsubstituted or a substituted alkyl group desirably having from about 1 to about 15 and preferably from about 1 to about 6 carbon atoms. Desirable peroxides include diacetyl peroxide, dilauryl peroxide, didecanoyl peroxide, and diisononanoyl peroxide, with dibenzoyl peroxide being preferred. The non-functional peroxide initiator decomposes to form CO₂ gas and free radicals having the formula R⁸ which also is represented by Y as the non-reactive terminus of the reaction product statistical monofunctional carboxyl-terminated polymer described above. The action of this type of initiator is also due to the fact that the peroxide oxygen-oxygen bond is readily dissociated, as by thermal means.

The amount of initiators present, on a mole basis, may vary from about 0.2 percent to about 90 percent difunctional initiator and from about 10 percent to about 99.8 percent non-functional initiator. Preferably from about 30 percent to about 75 percent difunctional initiator is used and from about 70 percent to about 25 percent non-functional initiator. Most preferred is from about 60 percent to about 40 percent difunctional initiator and from about 40 percent to about 60 percent nonfunctional initiator. As noted, one skilled in the art will appreciate that the reaction product statistical monofunctional polymer product is a blend or mixture of molecules having different end groups, namely a monofunctional species, a difunctional species and a non-functional species.

The liquid polymerization products can be prepared in any solvent for the initiators, the monomers or the polymers. The solvent is desirably low boiling so it can be readily removed. Such solvents are generally polar and do not act as chain transfer agents. Examples of such solvents include the various ketones having from 2 to about 10 carbon atoms, various alcohols having from 1 to about 7 carbon atoms, various aromatic compounds having from about 6 to about 10 carbon atoms, various esters of a carboxylic acid wherein the ester portion has up to about 4 carbon atoms and the dicarboxylic acid has from about 2 to about 3 or 4 carbon atoms in the non-ester portion, and various ethers including internal ethers having from about 3 to about 7 carbon atoms. Specific examples of suitable solvents include acetone, methyl ethyl ketone, 2-pentanone, 3-pentanone, methyl isobutyl ketone, methyl alcohol, ethyl alcohol, n-propyl alcohol, isopropyl alcohol, butyl alcohol, isobutyl alcohol, sec-butyl alcohol, tert-butyl alcohol, benzene, toluene, methyl acetate, ethyl acetate, propyl acetate, and tetrahydrofuran. Acetone is preferred.

The reaction temperature may range from about 40°C to about 120°C, desirably 60°C to about 100°C, and preferably from about 70°C to about 90°C. The number average molecular weight (Mn) of the reaction product statistical monofunctional carboxyl-terminated polymers ranges from about 1,000 to about 12,000, based upon the size exclusion chromatography method of determination.

Those skilled in the art will appreciate that in order to form a polymer having uniform composition throughout the charge and maintain constant molecular weight over the length of the polymerization, the initiator, and comonomer if copolymerizing, must be continuously metered throughout the polymerization. Therefore, the reaction product statistical monofunctional carboxyl-terminated polymers are made by a method whereby initially, the reactor is charged with monomer, and a small amount of initiator and comonomer if copolymerizing, and all of the polymerization solvent. The exact amounts of monomers and initiator will vary depending upon the product polymer, however, the amounts can be readily determined experimentally by conventional methods of calculation. Then, after bringing the reaction mixture to reaction temperature, more initiator, and comonomer if copolymerizing, are added during polymerization such that they are continuously metered including incremental addition or a plurality of batch additions, etc. throughout polymerization. Conventional procedures can be used to recover the resulting reaction products.

No emulsifier is necessary for this process. Alter polymerization it may be desirable to add conventional additives to the polymer, depending upon its end use, such as thermal stabilizers, including Geltrol® stabilizer commercially available from The BFGoodrich Company, Akron, Ohio, U.S.A.

Inasmuch as the reaction product statistical epoxy-terminated polymer composition is prepared by reacting one or more epoxy resins as set forth hereinbelow, with a reaction product statistical monofunctional carboxyl-terminated polymer composition, the actual composition will contain various monofunctional epoxy-terminated polymers which can be represented by the general structural formula 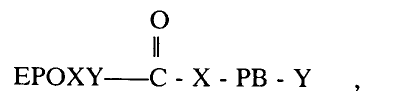
various difunctional polymers which can be represented by the general structural formula 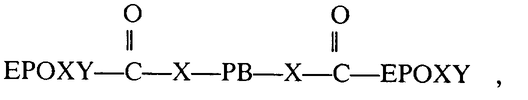
and various non-functional polymers which can be represented by the general structural formula Y―PBY―Y, wherein X, PB, and Y are as set forth hereinabove, and wherein EPOXY is derived from the epoxy resin which is reacted with the reaction product statistical monofunctional carboxyl-terminated polymer composition. Naturally, it is to be understood that during reaction with the statistical monofunctional carboxyl-terminated composition, a ring opening reaction takes place. The reaction between the epoxy resin and the statistical monofunctional carboxyl-terminated polymer composition generally takes place in the presence of an inert atmosphere at elevated temperatures utilizing small amounts of catalysts.

Considering the "EPOXY" group, it is generally from an epoxy resin known to the art and to the literature and can be various commercially available epoxy resins. Examples of specific epoxy resins or polymers which can be utilized include: polyhydric phenol polyether alcohols; glycidyl ethers of novolac resins such as epoxylated phenol-formaldehyde novolac resin; glycidyl ethers of mono-, di-, and trihydric phenols; glycidyl ethers of bisphenols such as diglycidyl ether of tetrabromobisphenol A; glycidyl ethers of polynuclear phenols; epoxy resin made from diphenolic acid; glycidyl ethers of aliphatic polyols such as chlorine-containing aliphatic diepoxy and polyepichlorohydrin; glycidyl esters such as aliphatic diacid glycidyl esters and epoxidized phenolphthalein; glycidyl epoxies containing nitrogen such as glycidyl amides and amide-containing epoxies; glycidyl derivatives of cyanuric acid; glycidyl resins from melamines; glycidyl amines such as triglycidyl ether amine of p-aminophenol and bis(2,3-epoxy-propyl)methylpropylammonium p-toluenesulfonate; glycidyl triazines; thioglycidyl resins such as epoxidized bisulfide; silicon-glycidyl resins such as 1,4-bis[(2,3-epoxypropoxy)-dimethylsilyl]; and fluorine glycidyl resins. Other epoxy resins which can be used include those which are synthesized from mono-epoxies other than epihalohydrins including epoxy resins made from unsaturated monoepoxies such as polyallyl glycidyl ether and glycidyl sorbate dimer; epoxy resins from monoepoxy alcohols; epoxy resins from monoepoxies by ester interchange; epoxy resins from glycidaldehyde; polyglycidyl compounds containing unsaturation such as allyl-substituted diglycidyl ether of bisphenol A; epoxy-resin adducts of the above; and epoxy resins which are synthesized from olefins and chloroacetyls such as butadiene dioxide, vinylcyclohexene dioxide, epoxidized polybutadiene, and bis(2,3-epoxycyclopentyl)ether. A more comprehensive list of epoxy resins can be found in Handbook of Epoxy Resins, by Henry Lee and Kris Neville, McGraw-Hill, Inc., 1967, which is hereby incorporated by reference.

A highly preferred epoxy resin is diglycidyl ether of bisphenol A (DGEBA) which has the following formula: 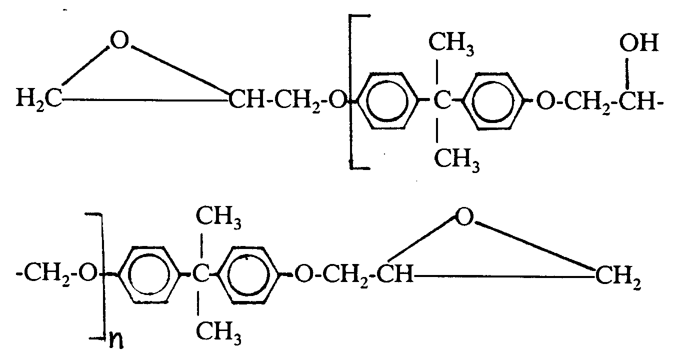
wherein n is an integer from 0 to 18, desirably from 0 to 14.3, and preferably from 0 to 5.5.

The various epoxy resins or polymers generally have a number average molecular weight of from about 200 to about 13,000. The various epoxy polymers generally are difunctional, that is, they have two epoxide groups typically at the terminal portions thereof. The amount of the epoxy resin utilized is such that the mole ratio of epoxy resin to the carboxyl-terminated statistical monofunctional polymer is generally stoichiometric but can be in excess, as from about 0.90 to about 40, desirably from about 0.90 to about 20, and preferably from about 0.95 to about 1.05. Thus, free epoxy resin will generally not exist in appreciable amounts within the reaction product statistical monofunctional epoxy-terminated reactive liquid rubber polymeric compositions.

Reaction of the various epoxy resins with the reaction product statistical carboxyl-terminated reactive polymers generally occurs at elevated temperatures in the presence of an inert atmosphere. Generally, any inert gas can be utilized such as nitrogen, argon, and the like. The reaction generally occurs at temperatures of from about 80°C to about 180°C, desirably from about 90°C to about 140°C, and preferably from about 90°C to about 120°C, generally in the presence of ambient or normal atmospheric temperature. In order to promote reaction, conventional epoxy catalysts are optionally utilized.

One group of catalysts which can be utilized are the various organic phosphines having from 3 to 40 carbon atoms which include various alkyl, various aromatic, various alkyl substituted aromatic, etc., phosphines such as triphenyl phosphine, diethylphenylphosphine, dimethylphenylphosphine, tribenzylphosphine, tri-n-butylphosphine, tri-t-butylphosphine, tricyclohexylphosphine, triethylphosphine, trimethylphosphine, tri-n-octylphosphine, triphenylphosphine, tris(3-chlorophenyl)phosphine, tris(4-chlorophenyl)phosphine, tris(4-fluorophenyl)phosphine, tris(2-hydroxyphenyl)phosphine, tris(3-methoxyphenyl)phosphine, tris(4-methoxyphenyl)phosphine, tris(2-tolyl)phosphine, and tris(3-tolyl)phosphine. A second type of catalyst are the various tertiary amines wherein the hydrocarbyl portion is generally an aliphatic and preferably an alkyl group, an aromatic group, or an aliphatic substituted aromatic, or an aromatic substituted aliphatic group, having a total of from about 1 to about 10 carbon atoms with from about 1 to about 6 carbon atoms being preferred. Examples of specific tertiary amine catalysts include benzyl dimethyl amine, trimethyl amine, triethylamine, and the like. Another group of suitable catalysts are the various alkyltriphenylphosphonium ester or halide salts wherein the alkyl group generally has from 1 to about 10 carbon atoms, and wherein iodide is the preferred halide salt. Examples of such specific catalysts include ethyltriphenylphosphonium acetate, ethyltriphenylphosphoniumiodide, n-hexyltriphenylphosphonium bromide, isobutyltriphenylphosphonium bromide, isopropyltriphenylphosphonium bromide.

As noted, although generally desired, the catalysts are optional and hence may not be utilized. When utilized, the amount thereof is generally up to about 1 percent by weight based upon a total weight of the epoxy resin terminator and the statistical monofunctional carboxyl-terminated reactive polymer, desirably up to about 0.5 percent by weight, and preferably from about 0.001 to about 0.1 percent by weight.

In order to reduce the level of residual reactions, the formed reaction product statistical monofunctional epoxy-terminated reactive polymers desirably have a low acid number, such as 2.0 or less, and preferably 0.4 or less. Moreover, the epoxy-terminated reactive polymers also have very low viscosities, such as generally less than 2,000,000 mPa·s, desirably 1,000,000 mPa·s or less, and preferably 500,000 mPa·s or less.

Inasmuch as the epoxy resin reacts with available carboxyl-terminated functional end groups, the overall make-up or content of the reaction product statistical epoxy-terminated reactive liquid rubber polymers will generally contain the same ratios or amounts of reactive epoxy-terminated end groups as the reaction product statistical carboxyl-terminated polymers. Thus, if the statistical carboxyl-terminated polymers are made utilizing approximately 50 percent of a difunctional initiator and 50 percent of a nonfunctional initiator, the statistical epoxy-terminated polymers will contain generally from about 5 percent to about 90 percent of the difunctional specie, from about 90 to about 5 percent of the difunctional specie, and from about 5 percent to about 50 percent of the monofunctional specie; desirably from about 10 to about 50 percent of the difunctional specie, from about 10 to about 50 percent of the nonfunctional specie, and up to about 50 percent of the monofunctional specie; and preferably about 25 percent of the difunctional specie, about 25 percent of the nonfunctional specie, and about 50 percent of the monofunctional specie. Hence, as noted above, it is termed a statistical monofunctional epoxy-terminated reactive liquid rubber polymer composition. The ratios of the various species of the statistical polymer will vary depending upon the amount of initiators generally utilized and hence the amount of the difunctional or nonfunctional species can vary widely while the amount of the monofunctional specie can generally not be greater than 50 percent.

### Blended Product Statistical Monofunctional RLP

The blended product low viscosity statistical monofunctional reactive liquid polymer compositions used in the present invention are generally the blended product of a difunctional epoxy-terminated reactive liquid polymer and a non-functional polymer. Such blending of the difunctional epoxy-terminated reactive liquid polymer with a non-functional polymer results in a statistical monofunctional epoxy-terminated reactive liquid rubber polymer, respectively. Thus, the blended product low viscosity statistical monofunctional reactive liquid polymer includes a blend of a difunctional-terminated polymer which contains a terminal epoxy group at both ends of the polymer chain, and a non-functional polymer which contains non-functional groups on each end of the polymer chain. The difunctional epoxy-terminated polymer is the same as the diepoxy-terminated polymer described hereinabove. The difunctional epoxy-terminated polymers are made by reacting dicarboxyl-terminated RLPs with epoxides, also as described hereinabove, in a conventional manner.

The non-functional polymers which are blended with the various difunctional-terminated polymers described above to form the blended product statistical monofunctional polymers used to modify the unsaturated polyester resins, are well known to the art and to the literature and have been described hereinabove. As previously stated, but without repeating the details, generally they are represented by the structural formula

Y-PB-Y

wherein Y is derived from a non-functional initiator, namely a non-functional azo or peroxide initiator, and -PB- represents the carbon-carbon backbone of the polymer. The non-reactive terminus -Y of the molecule is referred to as such because it will not undergo condensation or addition reaction.

The selected difunctional and non-functional terminated polymers are brought together and blended in a simple stirrer or mixing device at a temperature of from about 40°C to about 120°C, desirably from about 50°C to about 90°C, and preferably from about 50°C to about 60°C. The amount of difunctional and non-functional polymers present, on a mole basis, may vary from about 0.2 percent to about 90 percent difunctional polymer and from about 10 percent to about 99.8 percent non-functional polymer. Desirably from about 30 percent to about 75 percent difunctional polymer is used and from about 70 percent to about 25 percent non-functional polymer. Preferably from about 60 percent to about 40 percent difunctional polymer and from about 40 percent to about 60 percent non-functional polymer, and most preferably a blend of about 50 percent difunctional polymer and about 50 percent non-functional polymer is used. As noted, one skilled in the art will appreciate that the blended monofunctional polymer product is a mixture of molecules having different end groups, namely a difunctional species and a non-functional species. When the various amounts of difunctional and non-functional polymers are utilized in the mole amounts set forth above, it is expected that, statistically, one obtains an average functionality of from about 0.004 to about 1.8, desirably from about 0.6 to about 1.5, preferably from about 0.8 to about 1.2, and most preferably an average functionality of about 1.0. However, as noted above, the blended product statistical monofunctional terminated polymer desirably has an average functionality of approximately 1.

### Unsaturated Polyester Resin

The inventive unsaturated polyester resins containing epoxy-terminated reactive liquid polymers in the polyester backbone are prepared by reacting epoxy-terminated reactive liquid polymers with the reactants of the unsaturated polyester resins, thus incorporating the RLP toughening agents into the unsaturated polyester backbone.

The unsaturated polyester resins useful in the present invention are well known in the art and include those derived by condensation of unsaturated dibasic acids and/or anhydrides containing 4 to 9 carbon atoms with polyols including dihydroxy and trihydroxy compounds containing 1 to 12 carbon atoms. The polyester may include in the polymeric chain varying proportions of other saturated or aromatic dibasic acids and anhydrides which are not subject to cross-linking. The particular non-crosslinking moieties and their proportions will depend upon the desired properties of the final product. Maleic, chloromaleic and fumaric acid may be mentioned as exemplary of unsaturated dibasic acids. Aromatic and saturated acids and anhydrides which are exemplary of non-crosslinking moieties within the copolymer include phthalic anhydride, orthophthalic acid, meta-phthalic acid, para-phthalic acid, endomethylenetetra-hydrophthalic acid, tetrachlorophthalic acid, hexachloroendomethylenetetra-hydrophthalic acid, adipic acid, sebacic acid, succinic acid, and the like.

Any of a variety of well known polyols including di and tri-hydroxy compounds containing 2 to 9 carbon atoms, and preferably 2 to 6 carbon atoms, can be used for condensation with the diacids to produce polyesters suitable for use in this invention. Preferred compounds, which are mentioned by way of example of the large number of applicable compounds include ethylene glycol, propylene glycol, 1,2-, 1,3- and 1,4-butanediols, neo-pentyl glycol, diethylene ether diol, trimethylol propane, and the like.

The method by which the unsaturated polyester resins are made is not critical to this invention. The polyester resin is dissolved in a solvent comprising at least one polymerizable monomer which is copolymerizable with the dissolved polyester. The polymerizable monomer not only acts as a solvent but also copolymerizes with the unsaturated groups along the polyester chain. Polymerizable monomer which can be used in this invention include polymerizable vinylidene compounds having at least one terminal CH₂=C〈 group containing 2 to 12 carbon atoms, and preferably 3 to 10 carbon atoms. A wide variety of theses compounds are known including both aliphatic and aromatic unsaturated hydrocarbons and hydrocarbon derivatives, such as esters, acids and nitriles. Examples of suitable polymerizable monomers are styrene, methyl styrene, acrylonitrile, methyl acrylate, methyl methacrylate, vinyl acetate, allyl esters of phthalic adipic, maleic, malonic, and cyanuric acids. Styrene and methyl styrene are particularly useful polymerizable monomers. Commercial unsaturated polyester resins are normally sold as a liquid solution with the unsaturated polyester resin dissolved in the polymerizable monomer.

In the preparation of the inventive modified unsaturated polyester resins, the acid and/or anhydride are charged into a reaction vessel, together with epoxy-terminated liquid polymer, the desired glycol, preferably propylene glycol, and an inhibitor such as quinone or hydroquinone. These reagents are heated to about 175° to 250°C and reacted under a blanket of nitrogen with removal of water. The reaction is complete when the desired amount of water has been removed. The mixture can be cooled to about 110° to 170° C in order to add a portion of the remaining acid or anhydride following which, heating is resumed and water is removed until the desired acid number is reached. The reaction can be stopped when an acid number of 35 is reached. One skilled in the art will appreciate that this is substantially lower than the acid number required in the synthesis of equivalent carboxyl-terminated or hydroxyl-terminated polymers, which is about 50. Less acid in the polymer means less or no interference with the proper rate of chemical thickening to provide for optimum molding conditions of end users. When the desired acid number is reached, the material can be cooled to about 160° to 200°C, poured into a metal pan, and allowed to cool to room temperature as it solidifies. The product at this point is a modified polyester resin containing toughening agents in the polyester resin backbone. The solidified product is crushed or broken up into small pieces and dissolved in a polymerizable monomer, such as styrene, to yield a solution of about 20 to 80% solids. Preferred acid number for this product is 10 to 35 and preferred viscosity is 100 to 2000 cps. The amount of epoxy-terminated RLP used is from about 2% to about 15%, on the basis of the total weight of the unsaturated polyester polymer, preferably between about 4% to about 12% and preferred from about 8% to about 10%. The relative amounts of acid and/or anhydride and polyol used will vary depending upon the specific anhydride used. However, generally, on a mole basis a ratio of 1:1.2 diacid and/or anhydride to diol is used.

The total level of epoxy-terminated reactive liquid polymer that is used for adduction in the preparation of the modified unsaturated polyester resins is from bout 1 to about 30 parts by weight, and preferably 1 to 15 parts by weight, based on 100 parts of reactant monomers used to prepare the polyester resin. The reactant monomers include the unsaturated dibasic acids or anhydrides, and the polyols.

It is contemplated that the resin of the present invention may have many uses. In one aspect the resin may be admixed in a conventional manner with selected RLPs and cured to provide a modified unsaturated polyester resin having significantly enhanced toughness as measured by fractural energy over unmodified counterparts or counterparts modified by known methods of adduction or admixing alone.

It is also contemplated that when processing additives are included with the present inventive resin, it may be used as a molding composition and is particularly suitable in SMC and BMC applications requiring additional crack resistance. The nature of the other ingredients included with the resin will depend upon the end use of the molding composition. Such other ingredients may include fillers, mold lubricants, catalysts, thickening agents, low profile additives, reinforcing fibers, flame and smoke retardants and coloring agents.

Suitable filler materials useful in the inventive compositions include conventional inorganic fillers such as carbonates, sulfates, phosphates, silica, silicate, micrimica, carborundum, asbestos, glass, sandstone, graphite, and the like, reduced to a fine powder, as well as organic materials such as polyolefins, polyvinyl chloride, carbon black and acetylene black, polyacrylate, polymethacrylates, solid polyesters, phenol-formaldehyde resins, urea-formaldehyde resins, polyformal resins, polyamid resins. Typically, such fillers are used in the form of very fine powders.

Suitable reinforcing fibers include inorganic fibers such as glass fibers, asbestos fibers; vegetable fibers such as flax, hemp, cotton, and the like; and organic fibers such as nylon, polyester, aromatic polyamide, and the like. The reinforcing fibers may be present as chopped fibers having lengths of from about 0.1 to about 3 inches or an woven mats, non-woven mats, and the like. Sheet molding compounds will normally have chopped fibers of from about 0.5 to about 2 inches. The quantity of reinforcing fibers used will normally be from about 5 to 70 percent, preferably from 15 to 50 percent of fibers of the total weight of the composition.

Mold lubricants which may be employed in the preparation of the compositions of this invention include mold lubricants well known in the art and the choice is not critical. There may be mentioned, by way of example, zinc stearate, calcium or magnesium stearate or oleate and zinc oleate. In some instances, the mold lubricant may be omitted as where organic fillers having the property of being self-lubricating, such as polyolefins, polyvinylchloride, and the like, are employed.

Suitable thickeners are known and include oxides and hydroxides of the metals of group II of the Periodic Table, preferably the oxides and hydroxides of magnesium and calcium, to which small amounts of water are optionally added. Magnesium oxide was found to be an especially desirable thickener. The thickeners are normally used at levels of from about 1 to about 3 parts by weight per 100 parts of the combined weight of polyester resin and polymerizable monomer.

Examples of suitable catalysts are benzoyl peroxide, tertiary butyl peroxide, cyclohexanone peroxide, tertiary butyl peroctoate, tertiary butyl perbenzoate, azoisobutyrodinitrile, cumene hydroperoxide, and the like. The catalysts are normally used at levels of from about 0.5 to about 3 parts by weight per 100 parts of the combined weight of polyester resin and polymerizable monomer.

In applications where surface smoothness is critical, such as sheet molding compounds for automobile surface parts, it is customary to use a low-shrink additive, which is commonly referred to as a low-profile additive.

Low-profile additives which may be used in the unsaturated polyester resin compositions of this invention are well known in the art. They include thermoplastic homopolymers of vinylidene monomers containing 2 to 12 carbon atoms. Examples of homopolymers of alkyl acrylates and methacrylates such as methyl acrylate, ethyl acrylate, methyl methacrylate, ethyl methacrylate, butyl methacrylate, and the like; vinyl esters such as vinyl acetate, and the like; vinyl halides such as vinyl chloride, and the like; vinyl aromatics such as styrene and the like. Thermoplastic copolymers are also suitable for use as a low-profile additive such as copolymers of methyl methacrylate and lower alkyl esters of acrylic and methacrylic acids, and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid, methylol acrylamide and cetyl stearyl methacrylate. Copolymers of vinyl halides and vinyl esters are also useful as low-profile additives such as vinyl chloride/vinyl acetate copolymers, and the like. Other useful examples of low-profile additives are styrene/acrylonitrile copolymers, cellulose acetate butyrate, and cellulose acetate propionate. Excellent results were obtained using polyvinyl acetate.

Low-profile additives are normally supplied in a solution with a polymerizable monomer, such as styrene. After cure, the low-profile additive exists as fine particles dispersed in the polyester matrix. Low-profile additives may be used at a level of from about 5 to about 40 parts by weight based on 1200 parts by weight of the combined weight of the unsaturated polyester resin and the polymerizable monomer.

To prepare the novel molding compositions of this invention, normal procedures for preparing unsaturated polyester molding compositions are used. The remainder of the preparation will vary somewhat depending on the type of molding composition desired, such as sheet molding, bulk molding, hand lay-up, spray-up, vacuum bag molding, injection molding, casting, and the like.

For sheet molding compounds, a typical preparation procedure is to first mix the liquid ingredients together. The liquid polymer may be added as is or mixed with the polymerizable monomer to reduce its viscosity and facilitate handling. The liquid ingredients are then mixed with the fillers and mold release agents for about 15 to 20 minutes in a mixer such as Cowles mixer. The catalyst is then added to the mix and mixed for about 2 to 5 minutes. The thickening agent is then added and mixed for about 1 to 3 minutes. The resin composition is then spread onto non-adhering sheets, such as polyethylene. Chopped glass fibers are then sprayed onto the sheets of resin compound and the sheets brought together to form a composite. The composite is passed through compression rollers to effect impregnation of the glass by the resin mix. The sheets of the composite are then allowed to thicken with time (maturation) for about 1 to 3 days at about 32°C. For sheet molding applications, the resin composition should thicken to a viscosity of from about 30 x 10⁶ cps to about 100 x 10⁶ cps, preferably from about 40 x 10⁶ cps to about 80 x 10⁶ cps before molding under heat and pressure. The thickened sheets are then cut into the desired size and molded and cured at an elevated temperature.

The invention will be better understood by reference to the following further examples, which are directed to the formation of the epoxy-terminated form of the reaction and blended product statistical monofunctional polymers useful in the present invention.

### SPECIFIC EMBODIMENTS

### Example 1 (Reaction Product Statistical Monofunctional Carboxyl-Terminated Reactive Liquid Polymer)

A reaction product statistical monofunctional carboxyl-terminated polymer was obtained in the following experiment. A 20 gallon reactor was cooled to 25°C and evacuated to suck in 2.08 Kg acrylonitrile, 6.12 Kg acetone and 0.99 Kg initiator solution, in sequence. The initiator solution concentration was 10.3 percent ADVA and 6.03 percent AIBN. The reactor was evacuated until the acetone boiled (about 20-25'' Hg), then pressured to 20 psi with nitrogen. This was repeated and the reactor once again evacuated to 20'' Hg. The vacuum was broken by charging 38.0 lbs. of butadiene. The mixture was heated to reaction temperature of 85°C and allowed to react for approximately 13 hours. During polymerization, additional initiator mixture and acrylonitrile were metered into the reaction vessel. Conventional techniques were used to recover the product which had an acid number of 12.9, viscosity at 27°C of 65,000 mPa·s and a bound acrylonitrile content of 16.5 percent.

### Example 2 (Reaction Product Statistical Monofunctional Carboxyl-Terminated Reactive Liquid Polymer)

A reaction product statistical monofunctional carboxyl-terminated polymer was obtained in the following experiment. A 15 gallon reactor was cooled to 25°C and evacuated to suck in 3.52 Kg acrylonitrile, 5.58 Kg acetone and 2.72 Kg initiator solution, in sequence. The initiator solution concentration was 8.0 percent ADVA and 4.7 percent AIBN. The reactor was evacuated until the acetone boiled (about 20-25'' Hg), then pressured to 20 psi with nitrogen. This was repeated and the reactor once again evacuated to 20'' Hg. The vacuum was broken by charging 30.22 lbs. of butadiene. The mixture was heated to reaction temperature, 75°C and allowed to react for approximately 26 hours. During polymerization, additional initiator mixture and acrylonitrile were metered into the reaction vessel. Conventional techniques were used to recover the product which had an acid number of 13.3, viscosity at 27°C of 202,000 mPa·s and a bound acrylonitrile content of 25.9 percent.

### Example 3 (Reaction Product Statistical Monofunctional Epoxy-Terminated Reactive Liquid Polymer)

To a suitably sized reaction vessel was charged 400 grams of the reaction product statistical monofunctional carboxyl-terminated RLP of Example 1, and 34.7 grams of Epon 828, that is, DGEBA, at a molar ratio of approximately 1:1. 0.05 grams of triphenyl phosphine was added as a catalyst. In the presence of a nitrogen blanket, the temperature of the reaction vessel was raised to approximately 130°C and the reaction continued until the acid number was generally less than 0.6. The reaction time was approximately 20 hours to reach completion. The reaction product statistical monofunctional epoxy-terminated reactive polymer had a viscosity of 339,000 mPa·s at 27°C. In contrast, a similar reaction utilizing a difunctional carboxyl-terminated reactive polymer yielded a viscosity in excess of 2,000,000.

### Example 4 (Reaction Product Statistical Monofunctional Epoxy-Terminated Reactive Liquid Polymer)

An epoxy-terminated reactive polymer H was made utilizing the same procedure as in Example 3 except that the reaction product statistical monofunctional carboxyl-terminated RLP of Example 2, and 600 grams of Epon 828 was utilized. The molar ratio was thus approximately 17.3. No catalyst was utilized and the reaction was completed in about 4.5 hours. The reaction product statistical epoxy-terminated reactive polymer had a viscosity of 91,000 mPa·s at 27°C. In contrast, a control utilizing the same reactants and amounts except that a difunctional carboxyl-terminated reactive polymer was utilized, yielded a product having a viscosity of from about 300,000 to about 600,000 mPa·s at 25°C.

### Example 5 (Reaction Product Statistical Monofunctional Epoxy-Terminated Reactive Liquid Polymer)

In a suitably sized reaction vessel was added equal parts by weight of the reaction product statistical monofunctional carboxyl-terminated RLP of Example 2, and the diglycidyl ether of cyclohexane dimethanol. Under a blanket of nitrogen, the reaction temperature was raised to 130°C and reacted until the Acid No. was < 0.6. The reaction required 4.5 hours to reach completion. The final statistical monofunctional epoxy-terminated reaction product had a viscosity of 8600 mPa·s at 27°C. (The same reaction with a standard difunctional RLP gives an adduct with a viscosity of 15,000-25,000 mPa·s at 25°C.) Molar Ratio RLP/Epoxy - 1:8.6

### Example 6 (Reaction Product Statistical Monofunctional Epoxy-Terminated Reactive Liquid Polymer)

In a suitably sized reaction vessel was added 200 parts by weight of the reaction product statistical monofunctional carboxyl-terminated RLP of Example 2, and 300 parts of an epoxy novolac (such as DEN-438). Under a blanket of nitrogen was added 2.5 grams (0.5 weight percent) of phosphonium iodide and the reaction temperature was raised to 100°C. The reaction required only 1 hour to reach the desired end point of no titratable acid. The final statistical monofunctional epoxy-terminated adduct had a viscosity of 160,000 mPa·s at 50°C and 1,980,000 mPa·s at 27°C. (There is no comparable adduct with a difunctional RLP).

### Example 7 (Blended Product Statistical Monofunctional Epoxy-Terminated Reactive Liquid Polymer)

A blended product statistical monofunctional epoxy-terminated polymer was obtained in the following experiment.

A difunctional epoxy-terminated reactive polymer was made utilizing the procedure of Example 3, except that a statistical dicarboxyl-terminated reactive liquid butadiene-acrylonitrile copolymer containing 16.8 percent acrylonitrile and having a viscosity at 27°C of about 135,000, and 600 grams of Epon 828 was utilized. The molar ratio was thus approximately 17.3. No catalyst was used and the reaction was complete in about 5 hours. About 400 grams of a non-functional polymer then was added to the reaction product to form the blended product statistical monofunctional epoxy-terminated reactive polymer. The final product had a viscosity of from about 150,000 to about 230,000 mPa·s at 25°C.

### Example 8

Recipes 1,2,3 and 4 set forth below in Table II were prepared in the following manner. Unsaturated polyester resin unmodified and modified were dissolved in styrene. Cobalt napthenate (cobalt napt. 10%) and methylethyl ketone (MEK) peroxide curing agent then were added to the mixture which was placed in Teflon® resin coated aluminum molds to a sample thickness of about 1/4 inch. All recipes were cured for one hour at 60°C and subsequently for 2 hours at 120°C. Mechanical properties (tensile strength, elongation and modulus) were measured using ASTM procedure D-638, flexural strength and flexural modulus were measured using ASTM D-790, and fracture energies (K_{IC}) were measured using ASTM procedure E-399 using a compact tension specimen. Those skilled in the art will appreciate that the G_{IC} values are calculated values based upon K_{IC} values. Glass transitions (Tg) were measured using a Mettler DSC instrument. The unsaturated polyester resins were made in the following manner.

### Recipe 1 (Control - Unsaturated Polyester Resin Unmodified) (UPE-UM)

Isophthalic acid (2 moles) was placed in a reaction kettle equipped with a mechanical stirrer and surmounted by a packed column steam condenser and standard distillation head. Propylene glycol (3 moles) was added and the kettle equipped with a thermometer and nitrogen sparge placed so that they extend below the resin surface. The reaction was heated to 180°C until 65 ml of water had distilled. The reaction was cooled to 160°C and maleic anhydride (2 moles), quinone (220 ppm) and another 1.4 moles of propylene glycol was added. The temperature was raised to 210°C and the reaction was continued until the resin had an acid number of 50 ± 2. The resin was then poured into a glass pan, cooled and then dissolved in styrene.

### Recipe 2 (Unsaturated Polyester Resin Modified With Difunctional Epoxy-Terminated RLP) (UPE-ETBN)

Isophthalic acid (2 moles) was placed in a reaction kettle equipped with a mechanical stirrer and surmounted by a packed column steam condenser and standard distillation head. Propylene glycol (4.4 moles) was added along with 64.5 g of an epoxy terminated polybutadiene/acrylonitrile polymer (ETBN). The ETBN was made by reacting 300 g of HYCAR™ 1300X13 reactive liquid polymer (difunctional carboxyl-terminated RLP having a butadiene - 26% bound acrylonitrile backbone) with 63.9 g of Epon 828 epoxy (DGEBA with an epoxy equivalent weight of about 190). The kettle was equipped with a thermometer and nitrogen sparge placed so that they extend below the resin surface. The reaction was heated to 180°C until 65 ml of water had distilled. The reaction was cooled to 160°C and maleic anhydride (2 moles) and quinone (220 ppm) was added. The temperature was raised to 210°C and the reaction continued until the resin had an acid number of 50 ± 2. The resin was poured into a glass pan, cooled and then dissolved in styrene.

### Recipe 3 (Unsaturated Polyester Resin Modified With Reaction Product Statistical Monofunctional Epoxy-Terminated RLP) (UPE-MFET)

Isophthalic acid (2 moles) was placed in a reaction kettle equipped with a mechanical stirrer and surmounted by a packed column steam condenser and standard distillation head. Propylene glycol (4.4 moles) was added along with 73.9 g of an epoxy terminated polybutadiene/acrylonitrile polymer (ETBN). The ETBN was made by reacting 300 g of Hycar™ 1355X13 reactive liquid polymer (reaction product statistical monofunctional carboxyl terminated RLP having a butadiene - 26% bound acrylonitrile backbone) with 117 g of Epon 1002 epoxy (DGEBA with an epoxy equivalent weight of about 600-700). The kettle was equipped with a thermometer and nitrogen sparge placed so that they extend below the resin surface. The reaction was heated to 180°C until 65 ml of water had distilled. The reaction was cooled to 160°C and maleic anhydride (2 moles) and quinone (220 ppm) was added. The temperature was raised to 210°C and the reaction continued until the resin had an acid number of 50 ± 2. The resin was poured into a glass pan, cooled and then dissolved in styrene.

### Recipe 4 (Unsaturated Polyester Resin Modified With Difunctional Hydroxyl-Terminated RLP)

Isophthalic acid (2 moles) was placed in a reaction kettle equipped with a mechanical stirrer and surmounted by a packed column steam condenser and standard distillation head. Propylene glycol (4.4 moles) was added along with 53.2 g of a hydroxyl terminated polybutadiene/acrylonitrile polymer (HTBN), Hycar™ 1300X34 reactive liquid polymer. The kettle was equipped with a thermometer and nitrogen sparge placed so that they extend below the resin surface. The reaction was heated to 180°C until 65 ml of water had distilled. The reaction was cooled to 160°C and maleic anhydride (2 moles) and quinone (220 ppm) was added. The temperature was raised to 210° and the reaction continued until the resin had an acid number of 50 ± 2. The resin was poured into a glass pan, cooled and then dissolved in styrene.

**Table II**

| **RECIPES** | | | | |
|---|---|---|---|---|
| | **1** | **2** | **3** | **4** |
| UPE-UM | 60 | 0 | 0 | 0 |
| Styrene | 40 | 40 | 40 | 40 |
| Cobalt Napt. (10%) | 0.5 | 0.5 | 0.5 | 0.5 |
| MEK Peroxide | 2 | 2 | 2 | 2 |
| UPE-ETBN | 0 | 60 | 0 | 0 |
| UPE-MFET | 0 | 0 | 60 | 0 |
| UPE-HTBN | 0 | 0 | 0 | 60 |

**Table III**

| **PHYSICAL DATA FOR RECIPES 1,2,3 and 4** | | | | |
|---|---|---|---|---|
| | **1** | **2** | **3** | **4** |
| Ten. Stg. @ B, mPa | 35.7 | 42.3 | 37.4 | 39.2 |
| Elongation @ B, % | 1.03 | 1.21 | 1.01 | 1.15 |
| Modulus, GPa | 3.53 | 3.95 | 4.47 | 3.34 |
| Flex. Stg. mPa | 85.5 | 52.6 | 64.5 | 62.4 |
| Flex. Modulus, GPA | 3.28 | 3.37 | 3.41 | 3.40 |
| K_{IC}, MN/m³/2 | 0.526 | 0.585 | 0.621 | 0.64 |
| G_{IC}, J/m² | 74.6 | 89.7 | 100 | 105 |
| Tg, C | 123 | 105 | 105 | 104 |

The data in Table III shows an increase in fracture energy G_{IC} from the unmodified unsaturated polyester resin of recipe 1 which is free of rubber, to one that contains 40 parts per 100 parts of the base resin rubber content of recipes 2 and 3. The fracture energy G_{IC} of epoxy-RLP modified unsaturated polyester resins (2 and 3) is less than but comparable to hydroxy-RLP moldified unsaturatd polyester resins (4).

Although the invention has been described in terms of specific embodiments of a manner in which the invention may be practiced, this is by way of illustration only and the invention is not necessarily limited thereto since alternative embodiments and operating techniques will become apparent to those skilled in the art. Accordingly, modifications are contemplated which can be made without departing from the spirit of the described invention.

## Claims

1. A modified unsaturated polyester resin comprising the reaction product of an unsaturated dibasic acid and/or anhydride, a polyol and an epoxy-terminated reactive liquid polymer.

2. The resin of claim 1 wherein the acid and the anhydride contain 4 to 9 carbon atoms and the polyol contains 2 to 9 carbon atoms.

3. The resin of claim 2 wherein the polyol is a dihydroxy compound or a trihydroxy compound.

4. The resin of claim 3 wherein the reactive liquid polymer is a diepoxy-terminated polymer, a reaction product statistical monofunctional epoxy-terminated polymer or a blended product statistical monofunctional epoxy-terminated polymer.

5. The resin of claim 4 wherein the diepoxy-terminated polymer is the reaction product of an epoxide and a carboxyl-terminated reactive liquid polymer.

6. The resin of claim 5 wherein said carboxyl-terminated reactive liquid polymer has a carbon-carbon backbone containing polymerized units of at least one vinylidene monomer having at least one terminal 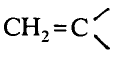 group.

7. The resin of claim 6 wherein the backbone of the carboxyl-terminated reactive liquid polymer is a copolymer of butadiene and acrylonitrile.

8. The resin of claim 7 wherein the carboxyl-terminated reactive liquid polymer contains from about 50% to about 100% by weight butadiene, from about 0% to about 40% by weight acrylonitrile and from about 0% to about 40% by weight carboxyl.

9. The resin of claim 8 wherein the carboxyl-terminated reactive liquid polymer is 1,3-butadiene/acrylonitrile α,ω-(4-cyano-4-methyl butyric acid).

10. The resin of claim 9 wherein the carboxyl-terminated reactive liquid polymer is polybutadiene homopolymer α,ω-(4-cyano-4-methyl butyric acid).

11. The resin of claim 5 wherein the epoxide is a diglycidyl ether of bisphenol A.

12. The resin of claim 4 wherein the reaction product statistical monofunctional epoxy-terminated polymer is a mixture of difunctional epoxy-terminated polymer, monofunctional epoxy-terminated polymer and non-functional polymer and said polymer has a functionality of from about 0.004 to about 1.8.

13. The resin of claim 12 wherein said reaction product statistical monofunctional epoxy-terminated polymer is the reaction product of an epoxide with a carboxyl-terminated statistical monofunctional polymer.

14. The resin of claim 13 wherein the carboxyl-terminated statistical monofunctional polymer is a mixture of carboxyl-terminated monofunctional polymer, difunctional carboxyl-terminated polymer and non-functional polymer.

15. The resin of claim 14 wherein the reaction product statistical monofunctional carboxyl-terminated polymer is the reaction product of backbone-forming monomers and a mixture of a difunctional and a non-functional initiator.

16. The resin of claim 15 wherein the backbone-forming monomers are vinyl monomers having at least one terminal vinyl group and optionally at least one comonomer of a vinyl aromatic, a vinyl nitrile, a vinyl acid, an amide of olefinically unsaturated carboxylic acids containing 2 to 8 carbon atoms, or an allyl alcohol.

17. The resin of claim 16 wherein the backbone-forming monomers are 100% vinyl monomers.

18. The resin of claim 17 wherein the vinyl monomer is butadiene.

19. The resin of claim 16 wherein backbone-forming monomers are present in an amount of from about 50 percent to about 100 percent diene monomer and up to about 50 percent by weight vinyl nitrile comonomer.

20. The resin of claim 19 wherein the diene monomer is butadiene and the vinyl nitrile is acrylonitrile.

21. The resin of claim 20 wherein the difunctional initiator is an organic azo compound or a peroxide.

22. The resin of claim 21 wherein the organic azo initiator is a bis-azocyano acid.

23. The resin of claim 22 wherein the bis-azocyano acid is azodicyanobutyric acid or azodicyanovaleric acid.

24. The resin of claim 21 wherein the peroxide is succinic acid peroxide or glutaric acid peroxide.

25. The resin of claim 15 wherein the initiators are present in an amount, on a mole basis, of from about 0.2 percent to about 90 percent difunctional initiator and from about 10 percent to about 99.8 percent non-functional initiator.

26. The resin of claim 4 wherein the blended product statistical monofunctional epoxy-terminated polymer is the product of a difunctional epoxy-terminated reactive liquid polymer blended with a non-functional polymer having an average functionality of from about 0.004 to about 1.8.

27. The resin of claim 26 wherein the amount of difunctional and non-functional polymers present, on a mole basis, is from about 0.2 percent to about 90 percent difunctional polymer and from about 10 percent to about 99.8 percent non-functional polymer.

28. The resin of claim 27 wherein the difunctional epoxy-terminated reactive liquid polymer is the reaction product of an epoxide with a carboxyl-terminated reactive liquid polymer.

29. The resin of claim 28 wherein said carboxyl terminated reactive liquid polymer has a carbon-carbon backbone containing polymerized units of at least one vinylidene monomer having at least one terminal CH₂=C〈 group.

30. The resin of claim 29 wherein the backbone of the carboxyl-terminated reactive liquid polymer is a copolymer of butadiene and acrylonitrile.

31. The resin of claim 30 wherein the carboxyl-terminated reactive liquid polymer contains from about 50% to about 100% by weight butadiene, from about 0% to about 40% by weight acrylonitrile and from about 0% to about 40% by weight carboxyl.

32. The resin of claim 31 wherein the carboxyl-terminated reactive liquid polymer is 1,3-butadiene/acrylonitrile α,ω-(4-cyano-4-methyl butyric acid).

33. The resin of claim 32 wherein the carboxyl-terminated reactive liquid polymer is polybutadiene homopolymer α,ω-(4-cyano-4-methyl butyric acid).

34. The resin of claim 33 wherein the epoxide is a diglycidyl ether of bisphenol A.

35. A molding composition comprising a modified unsaturated polyester resin which is the reaction product of an unsaturated dibasic acid and/or anhydride, a polyol and an epoxy-terminated reactive liquid polymer

36. The composition of claim 35 wherein the reactive liquid polymer is a diepoxy-terminated polymer, a reaction product statistical monofunctional epoxy-terminated polymer or a blended product statistical monofunctional epoxy-terminated polymer.

37. A shaped article made from the composition of claim 36.

38. A method for making a modified unsaturated polyester resin by reacting a dibasic acid and/or an anhydride, a polyol and an epoxy-terminated reactive liquid polymer.

39. The method of claim 38 wherein the reactive liquid polymer is a diepoxy-terminated polymer, a reaction product statistical monofunctional epoxy-terminated polymer or a blended product statistical monofunctional epoxy-terminated polymer.
